# EUROPEAN PATENT SPECIFICATION

(11) **EP 1 216 286 B1**
(45) Date of publication and mention of the grant of the patent: **15.09.2010**
(21) Application number: 00976238.6
(22) Date of filing: 17.07.2000
(51) Int. Cl.: C10B 29/00, C10B 47/02, C10B 57/00

(54) **Energy recovery coke oven facility producing high quality metallurgical coke**
Energierückgewinnungskoksofenanlage zur Herstellung von metallurgischem Koks hoher Qualität
Installation de fours de cokerie à recuperation d'energie, produisant du coke metallurgique de grande qualité

(30) Priority: 10.09.1999 IN BO064099
(43) Date of publication of application: 26.06.2002
(73) Proprietor: Sesa Goa Limited, Panaji 403 001 GOA (IN)
(72) Inventor: DE'LIMA, Pfx, Goa 403 004 Goa, Daman and Diu (IN)
(74) Representative: Schwarz, Albin
(86) International application number: PCT/IN2000/000067
(87) International publication number: WO 2001/018150

(56) References cited:
- US-A- 3 623 959
- UKHMYLOVA G S: "By-product collecting-free coke manufacture in Javell-Tompson ovens with waste heat utilization and power generation" COKE AND CHEMISTRY, no. 7, July 1993 (1993-07), pages 41-45, XP002160407
- CIARIMBOLI JOSEPH P ET AL: "NONRECOVERY COKE MAKING - PAST, PRESENT AND FUTURE" IRON AND STEEL ENGINEER, vol. 56, no. 6, June 1979 (1979-06), pages 49-54, XP002160408

## Description

The following specification describes the nature of the invention and the manner in which it is to be performed:-

The invention relates in general to the system and process of producing coke and steam/electrical energy from coal using Sesa designed sole heated foundation air-cooled coke ovens, charge car, ram car, hot coke car, quench tower, coal bin tower, common flue and power plant.

### I. Background of the Invention and Prior Art

Coke is a unique source of primary energy in a physical form. Whereas the basic method of producing coke is by the destructive distillation of selected types of bituminous coals, termed, "coking coals". Various processes of manufacturing coke have evolved and developed over a period of time.

The primitive method of producing coke involved, stock-piling the coal, in round heaps, igniting the piles and then covering the sides with clay type soil. The burning of coal together with the volatile matter contained in it generated the heat required to form coke. However, in adopting this method, a considerable amount of loss of coal occurred and also caused the surrounding area to be polluted owing mainly to the smoke generated by the incomplete combustion of coal, tar and gases. This coking process laid the foundation for the subsequent development of various processes for the manufacture of coke.

The various processes for the manufacture of coke that evolved over a period of time may briefly be explained as under:

### 1) The Beehive Ovens:

The beehive coking process is based on self heating of coking coal charged in dome shaped circular ovens made of bricks by means of partial combustion of coal particularly the volatile matter. The temperatures in the ovens tended to be low and as a result the coke manufactured in such ovens was of an inferior quality, and also led to a loss of coal.

### 2) By-product Oven Design

With the needs for better quality of coke requiring higher carbonisation temperatures and the extraction of valuable coal chemicals and coke oven gases which provided good industrial gaseous fuel, the by-product oven design gained prominence.

In this process, the coke ovens are heated by an external gas and the coke oven gas is recovered and distilled to recover chemicals as by-products. However, this process did have solid, liquid and gaseous pollutants inspite of the various measures taken to control them. Countries with less stringent pollution laws prevailing then, tolerated their method of functioning and they dominated the scene universally. However more recently, stricter pollution control laws made their operations extremely difficult. Besides the capital costs of setting up such pollution control measures also proved uneconomical. Consequently new by-product plant installations are comparatively rare and old plants are not being readily refurbished.

### 3) Mechanised Mitchel non recovery type of beehive ovens

Another line of development took place mainly in Australia where the Mitchel type of beehive ovens were further developed into mechanised non-recovery ovens with much lower levels of pollution. While the capital costs of these ovens increased due to mechanisation they were significantly lower than those of the By-product ovens.

### 4) Kembla Coke Ovens

The Kembla Ovens were designed essentially on the principles of Mitchel Non recovery type of beehive ovens and were set up at Illawara, Australia. They used a specially developed sole flue heating arrangement with intrawall passages to achieve all round heating of the coal charge. The refractories used were fireclay bricks of 55% alumina content in the underflues and 30% in the main oven walls. However, the cycle times were high and the oven temperatures lower than those in the Byproduct ovens leading to inferior quality of coke. One of the main drawbacks of this design was that the ovens were constructed directly on the ground. The heat transferred to the ground was very high and the strata below had to therefore be capable of absorbing the high temperatures transmitted to it from the oven underflues.

### 5) Jewell Thompson Non Recovery Ovens:

The Jewell Thompson non recovery type of oven was developed at Vansant in West Virginia, U.S.A. by the SUN COAL Company. It used broadly the same principles of heating as the Kembla technology referred to in 4 above. However changes in the underflue pattern, the waste gas outlets etc. were made and along with the introduction of Silica bricks they provided a design with more uniform heating and higher carbonisation temperatures above 1200 Deg. C. in the ovens and hence lower cycle times resulting in increased productivity. Consequently, the coke produced could be used effectively in large capacity blast furnaces as well.

The design of the coal charge car and ram car were also combined into a single unit using different mechanisms for feeding coal from the side of the oven instead of from the top.

The facility at Vansant does not incorporate any arrangement to recover the heat from the waste gases which are let out in the atmosphere. Subsequently a similar plant was built in 1997-1998 near Chicago at Inland Steel for Indian Harbour Coke Company (a subsidiary of Sun Coal) to produce 1.3 million tons of Coke and recover 100 MW of energy through a set of waste heat boilers to raise steam and turbo generator to generate electricity.

### 6) Sesa Non Recovery Ovens

Kembla Coke Ovens were installed at Amona, Goa in 1994 based on the technology and design acquired from Kembla Coal & Coke Pty., Australia whose associates Kembla Goa Holdings were 40% equity holders in Sesa Kembla Coke Company Limited. At present Sesa Kembla Coke Company is 100% subsidiary of Sesa Goa Limited.

The Kembla technology lacked on a number of counts the most significant was the transfer of heat from the ovens to its foundation causing the foundation of the ovens to sustain major damages within the first few months of their operation, particularly their sinking in the foundation and leading to their ultimate shut down. There were also serious deficiencies in the design of the brickwork and expansion joints the features incorporated which not only restricted the temperatures of operation and affected the quality of coke produced but also affected the structural soundness of the ovens under continuous short cycle operation. There were other deficiencies e.g. Design of the bricks (alumina content and shape) inadequate draft control and many other engineering details that were not upto the needs. On the whole, the design deficiencies led to the ovens failing to reach satisfactory production levels and collapse in the short span of two years.

The construction and design of the Beehive oven and the Mitchel type of beehive ovens were primitive, uneconomical and not environmentally friendly. The byproduct ovens were capital intensive and pollution control was very difficult to achieve and expensive. Similarly, while the Kembla Coke Ovens and the Jewell Thompson Non Recovery Ovens improved upon the three earlier types of ovens, the Kembla Ovens suffered from their own inherent shortcomings.

The Sesa technology has in contrast improved upon these very defects and / or shortcomings and introduced new innovative design features resulting in an all around improvement in the quality of coke produced at a low capital cost with the capability of recovering energy in an environmentally friendly process.

### The development of this process involved in alia the following:

1. Designing and installing a cooling arrangement at the base of the ovens with detailed assessments of the quantities of air required etc. to ensure that the temperatures in the ground below the ovens are within safe limits.
2. Designing and installing of the entire brickwork which involved new shapes and qualities.
3. Designing and installing of a network of expansion joints to ensure that no undue pressures are exerted on any portion of the brickwork, thereby contributing to the structural stability.
4. Designing and installing the under-flue system for better draft control.
5. Designing and installing arrangements for introduction of cooling air in the primary and secondary air system for additional heat recovery and for tertiary air at selected points in the common flues for ensuring complete combustion of products in the waste gases going to the stack.
6. Introduction of a set of a new design that of water cooled main damper and individual dampers in the waste gas system for control of draft in the ovens, which would result in less burning of coal, elimination of pollutants in the waste gas and better recovery of heat from the ovens. The waste gases in this system can be directly fed to the waste heat boilers without any prior treatment.
7. Ovens are equipped with an unique design for measurement of temperatures, which is a low cost and high reliability method of process control.
8. Sesa technology uses a coal charge, ram car and a hot coke car, all designed, developed and built at Sesa's Engineering Division. These cars have simplified the overall functioning of the coke ovens.

The all round improvement achieved by the Sesa technology over the Jewell Thompson technology are as follows:
a) newly designed at Sesa's Engineering Division, built modified and developed by the Applicant. These cars have simplified the overall functioning of the coke ovens.
   The combined charge and ram car in the case of the Jewell Thompson process require the introduction of a false door during charging which is replaced with the real door once the charging is completed. This results in some coal spillage which needs to be handled. The Jewell Thompson system is designed to achieve a marginally superior compaction of the coal in the oven. The Sesa ovens with their modified leveller design are able to achieve a similar result though through a different route viz. the leveller design.
b) The Sesa ovens are built of fireclay bricks of different grades, shapes and sizes. These bricks are incorporated in the oven structure at specific locations so as to enable the ovens to withstand high temperatures. These alumina bricks are substantially cheaper if compared to silica bricks and contribute to the low capital costs.
   The ovens are equipped with a unique design of temperature measurement ports which permit temperature measurement with a pyrometer, which is a low cost high reliability method of process control.
   The Jewell Thompson Non Recovery Ovens are built of silica bricks. Although these permit the process to be carried on at high temperatures, they could result in an increase in NOX. The Silica bricks also tend to crack when the ovens are shut down for repairs.
(c) Sesa's common flues with tertiary air injection arrangement helps ensure that waste gases are free of particulates and combustible components and can be fed to the waste heat boilers without any prior treatment. The Jewell Thompson's proximate boiler location has resulted in fouling of the boilers.
(d) The Sesa technology recovers the heat from the air stream below the underflues for eventual heat recovery by a unique method of recycling the hot air into the ovens.

The Jewell Thompson process does not provide for the heat recovery from below the underflues.

The all round improvement achieved by the Sesa technology over the Kembla technology are as follows:
1a. The Kembla technology uses three grades of Fireclay bricks viz. 30 D, 55 D and 62 D with in situ castables LC 45 and LC 60.
   The Sesa technology has examined in great detail the various temperatures in the ovens and uses a mosaic of 30 D, 45 D, 55 D, 62 D and 70 M bricks with a wide range of castables Whiteheat C, K and LC 50 in order to achieve lower levels of oven structure distortion and eventually longer life.
   On the floor of the oven the Kembla technology used 30 D Fireclay bricks whereas the Sesa technology uses silica bricks to maximise heat transfers from the sole flue.
1b. A carefully introduced set of expansion joints will ensure structural stability of the brickwork. The expansion joints provided in the Kembla design were not complete and tended to create stresses in the brickwork particularly in the region of arches. The Sesa technology's air passage below the underflues insulate the foundation and recover energy.
1c. In the case of Kembla technology the ovens rest on a foundation on the earth and heat is transmitted and lost into the earth below. In the case of Sesa technology air passage in the refractories insulate the oven foundation below and recover the heat for use in energy recovery. This also permits the use of lower grade refractories in the foundation to save capital costs.
1d. The Sesa technology's individual dampers permit better process control. The use of the water cooled main damper is also and improvement. Incase of Kembla technology the main damper tended to crack with frequent operation. In Sesa's water cooled main damper the life of the damper was substantially enhanced.
   The Kembla technology did not have any individual oven damper control. The introduction of individual oven dampers in the Sesa technology has substantially improved process control in maintaining consistent cycle times and ensuring control of oven temperatures while minimising the carry over of particulate matter into the common flue.
1e. The insulation of the ovens and common flues in the Sesa technology are more effective.
   The Kembla ovens are essentially of the non-recovery type and sufficient attention is not paid in design for the conservation of heat.
   The Sesa ovens being of the energy recovery type, care has been taken to introduce adequate insulation to minimise heat loss and to conserve energy for recovery.
1f. The Sesa ovens have a superior oven door design which does not require daubing i.e. clay lining outside the door.
   The Kembla technology requires daubing of its oven door.
   The Kembla oven doors are designed in a manner that allows significant quantities of air to go through the side of the doors if they are not sealed with clay. This is cumbersome and labour intensive.
   The Sesa oven doors have been reinforced to minimise distortion, have additional insulation to minimise heat loss and are fitted with steel guides that the door is pressed against the oven sides which ensures a minimal air leakage into the ovens even though the doors are not daubed with clay.
2. The Sesa technology's coal charge car and ram car are more sophisticated, function better and are more reliable.
2a. Charge Car : the most important improvement in the Sesa charge car is the mechanism of telescopic chutes that are lowered into the charge ports in order to ensure minimal particulate emissions. Additionally the handling of lids and the lid design itself are improvements over the Kembla design. In the case of the Sesa charge car the inside of the bins is lined with stainless steel to ensure a more free movement of coal into the oven.
2b. Ram Car : The Sesa Ram Car has a hydraulically controlled levelling mechanism that is more complex than that in the Kembla design and is therefore able to achieve superior levelling. The speed of the car is also higher enabling the pushing sequence to be altered easily to more sophisticated 5-2 pushing series against the odds and evens system followed by Kembla. (The former is preferred for more even heat emissions used for power generation).
   The Kembla design of the bag filter did not have an adequate system for cooling of extracted gases before entering the bag filter whereas the Sesa design has incorporated such a system that improves the operation of the bag filter and ensures a longer life of bags.
2c. Hot Coke Car: The hot coke car is provided with SS chassis to resist corrosion for improvement of its life and with hydraulic latches for locking and opening the discharge flap, thus providing a simple mechanism for reliable operation.

### IL INVENTION

The technical features essential for the invention to be carried out are explicitly disclosed in the working of independent claims 1 and 7. Other optional features are included in the working of the dependant claims.

The invention explicitly provides a new design of ovens and an all round improvement in the art of technology over the prior published art to ensure the following objectives namely:-
1) To produce high quality metallurgical coke of low CRI and high CSR by achieving desired temperatures by means of using appropriate grade and shapes of refractory bricks in the various parts of the ovens and by providing cooling air ducts at the foundation level.
2) Low capital cost per unit of coke produced by means of appropriate grades and shapes of refractory bricks and numerous constructional features of the plant and by the recovery of electrical energy from the waste gases which in the prior art was wasted.
3) To produce coke and electrical energy in a clean process with pollution levels much below the acceptable norms. This is achieved as the Sesa ovens have very low levels of toxic and particulate emission as compared with the By-product Oven design. The negative pressure maintained in the ovens ensure no leakage of gaseous material from the ovens.

Though the invention mainly aims at achieving the objectives laid out above, it includes the complete system and process of producing coke and a controlled output of hot flue gasses that can be used to generate steam / electrical energy from coal using Sesa sole heated foundation air-cooled coke ovens, charge car, ram car, hot coke car, quench tower, coal bin tower, common flue.

This invention therefore comprises of a complete arrangement of ovens, underflues, cooling air ducts under the oven, its reuse in the ovens, the feeder flue, the control dampers in the feeder flues, the common flue, the charge car operating over the ovens, the ram car operating on one side of the ovens and the hot coke car operating on the other side of the ovens, the oven doors, the oven door operating mechanism, the coal bin tower with the weighbridge, and the arrangement for the supply of hot flue gasses to the boilers of the power plant.

A determined amount of blended coal is fed into a charge car consisting of a container of 28 tonnes capacity which moves over the oven, opens and discharges the coal into the oven. The oven is a specially designed structure made of various qualities and shapes of refractory bricks designed to withstand the high temperatures required to carry out the coking process effectively within the required cycle time and to break up the pollutants into combustible components. During the 48 hours (approximate) of coking process in the oven volatile matter goes out of the coal in the oven, burns in the oven space below and above the oven floor at a regulated temperature of 1250 Deg. C or thereabout. The combustion is controlled by allowing air in and the hot waste gases are led to a common flue refractory lined inside to withstand the high temperature. The common flue is provided with an arrangement for automatic ingress of tertiary air for complete combustion. The waste gases are led to the boiler for producing steam and electric power in a turbine / generator for energy recovery or alternatively led to a oven stack of sufficient height to maintain a draft in the oven to sustain the coking process.

After approximately 48 hours the doors of the oven are opened and the ram car of steel frame mounted on wheels and controlled by an operator through a control cabin pushes the red hot coke out of the oven into a waiting hot coke car at the other end. The hot coke car is a container mounted on wheels which carries the hot coke to the quench tower where water is sprayed on the hot coke car and the coke is quenched The coke is then discharged into a hopper and transported to an area where the coke is separated to the required sizes.

The whole operation and oven pushing sequence is carried out in a manner that provides adequate and consistent heat input that facilitates the continuous operation of a power plant. For this purpose a high plant availability with minimum interruption has to be ensured while also ensuring minimal heat loss from the system.

The quality of coke produced has a lower Coke Reactivity Index ( CRI ) and higher Coke Strength After Reaction ( CSR ) due to higher coking temperatures and optimal coking cycle time.

While the invention is described with a certain configuration it is understood that it is not intended to limit the invention to this configuration but on the contrary it is intended to cover all alternatives, modifications and equivalents as may be included within the spirit and scope of the invention.

Although particular embodiments of the invention have been shown and described in detail, it will be obvious to those skilled in the art that changes and modifications of the present invention, in its various aspects, may be made without departing from the invention in its broader aspects, some of which changes and modifications being matters of routine engineering or design, and others apparent only after study.

The features of the present invention which are believed to be novel are set forth in detail in the appended claim. The organisation and manner of operation of the invention, together with further objects and advantages thereof, may best be understood by reference to the following descriptions taken in connection with the accompanying drawings in which like reference numerals identify like elements.

Sheet 12/1 is a perspective view of the energy recovery coke oven facility which the present invention uses to produce high quality metallurgical coke having low Coke Reactivity Index (CRI) and High Coke Strength after Reaction (CSR) and steam / electrical energy with pollution levels below acceptable norms.

Sheet 12/2 is a sectional view of the facility taken in the plane of line ZZ which is bent to view all the units which comprise the invention.

Sheet 12/3 is a cross section view of one oven taken along a plane of line Y-Y in sheet 12/1. The sheet also shows a sectional views of the oven along the plane of line A.A, showing the circular roof of the oven, the oven floor and the underflues. A sectional view of the oven along the plane of the line BB shows the arch of brickwork at the oven ends.

Sheet 12/4 is a cross section view of the dividing wall between any two ovens taken along the plane of the line DD in section AA of sheet 12/3. The sheet 12/4 also has a view E in the cross section Y-Y in sheet 12/3 to show the ram car side door. The door in the view E is shown in the opened condition to show the layer of coke in the oven. Also shown is a schematic view of the door operating mechanism provided on both sides of the ovens used for opening and closing of any oven door.

Sheet 12/5 shows the elevation view of the charge car (3) shown in the perspective view in sheet 12/1.

Sheet 12/6 shows the elevation view of the ram car (4) shown in the perspective view in sheet 12/1.

Sheet 12/7 shows the plan view of the pusher mechanism taken from the direction of line FF in sheet 12/6 and elevation view of the pusher mechanism taken from the direction of line GG in the plan view in sheet 12/7.

Sheet 12/8 shows the plan view of the leveller mechanism taken from the direction of line HH in sheet 12/6 and elevation view of the leveller mechanism taken from the direction of line JJ in the plan view in sheet 12/8.

Sheet 12/9 shows the elevation view of the Hot Coke Car (5) shown in the perspective view in sheet 12/1 and section view taken along the plane of the line KK.

Sheet 12/10 shows the quench tower elevation shown in the perspective view in the sheet 12/1.

Sheet 12/11 shows the plan and elevation of the common flue duct and the stack. Sheet 12/12 shows the coal bin tower elevation shown in the perspective view in sheet12/1.

### Ovens : Reference drawings 12/1 to 12/4.

The oven is a specially designed structure made of various qualities and shapes of refractory bricks designed to withstand desired temperatures required to carry out the entire coking process effectively within the required cycle time and to break up the pollutants into combustible components.

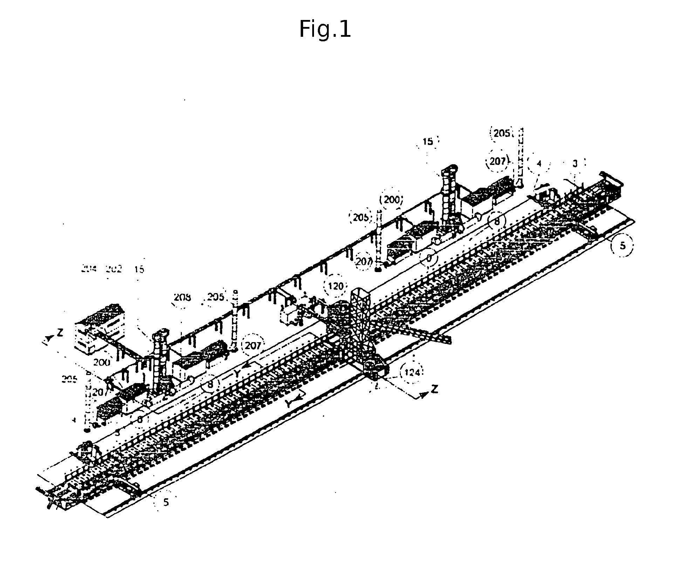

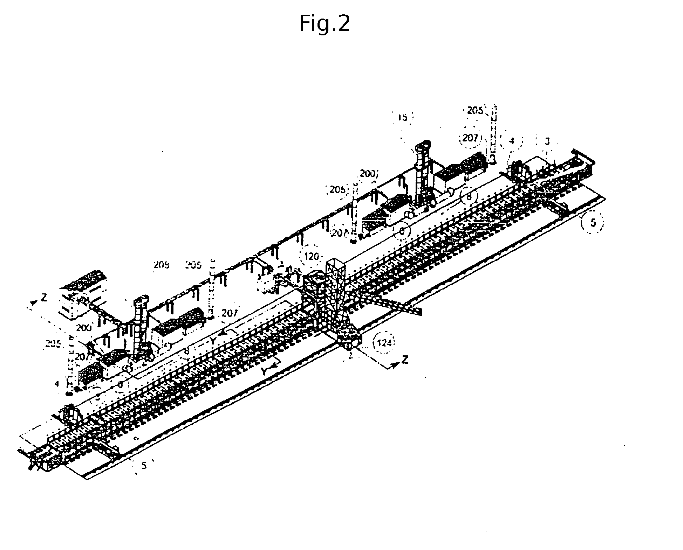

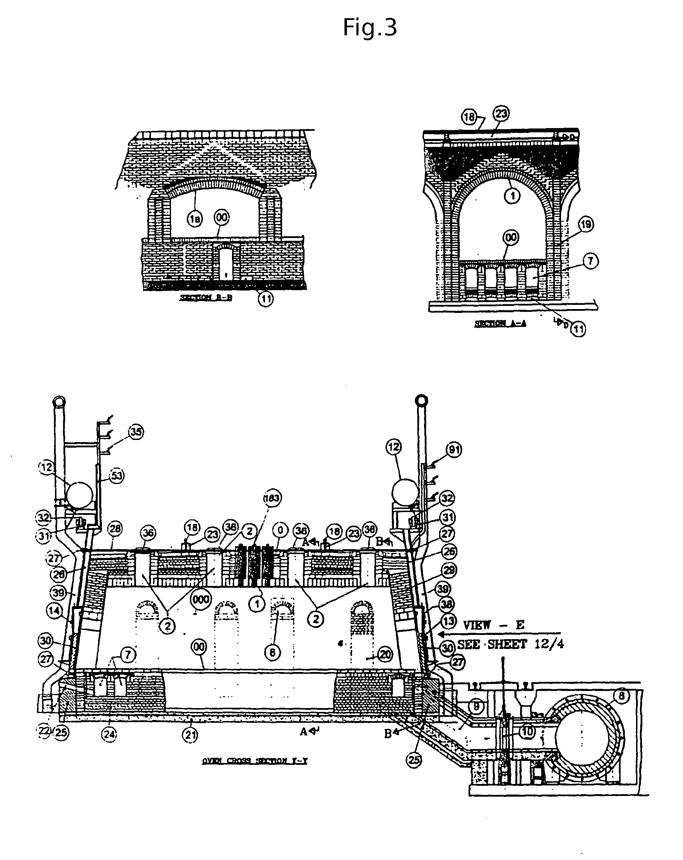

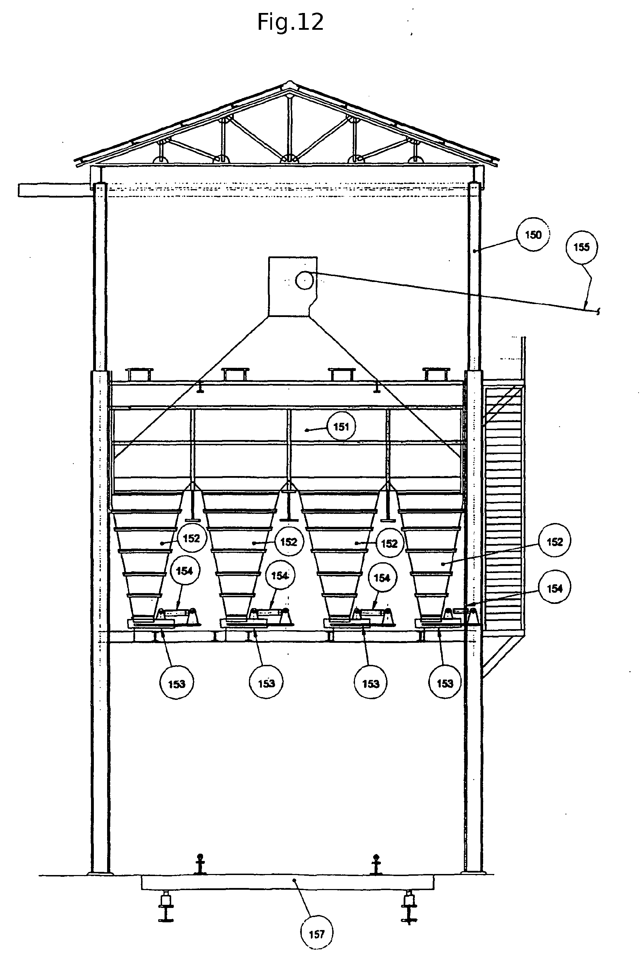

The ovens are shown in the perspective drawing 12/1 and section drawing 12/2 as item (0) and a detailed view of the same are depicted in drawings 12/3 and 12/4 respectively. The oven (0) as shown in drawing 12/3 consists of a chamber (000) having a floor (00) of size 2.74m x 10.5m constructed of refractory bricks. The oven has a semi circular oven roof arch (1) in section AA and end arch in section BB. The roof is provided with four openings called charge ports (2) for charging the oven with coal. The charge ports (2) are covered with cast iron covers (36) duly protected with cast refractory. The roof is also provided with temperature measurement ports (183) which permit temperature measurement with a pyrometer. A charge car moves over the ovens on two charge car rails (18) supported by steel beams (23) which in turn is supported by the dividing walls (19) shown in section AA in sheet 12/3. The dividing walls (19) in sheet 12/4 between the ovens are provided with gas outlet openings (6) and ducts (20) leading to the under flues passages (7) under the oven floor as depicted in the drawing 12/3. Referring to drawing 12/3 the volatiles in the coal burn in the oven chamber (000) and in the underflues passages (7) thus heating the oven. The volatile and waste gases pass through the gas outlet openings (6), ducts (20) into the underflues passages (7). The underflues passages (7) are four in numbers and connected to the common flue duct (8) by a feeder flue (9). The feeder flues (9) from twenty one ovens are connected to a common flue duct (8) and vented to a stack (15) as depicted in drawing 12/2. The feeder flue (9) is provided with a guillotine damper (10) to control the draught in the oven at various stages in the process cycle. The oven is supported over a castable refractory foundation (21) on the ground. The temperature of the foundation (21) is kept at a safe level by four air ducts (11) as depicted in section AA which aspirate air at one end and exhaust at the other end. This exhaust can either be reutilised in the oven to recover energy or conveyed by an overhead duct (12) and led to the boiler installation. The exhaust connection (180) is shown in view "E" of sheet 12/4 and is connected to the duct (39) or to the oven air inlet (22) and controlled by valves (181) and (182). The combustion of the volatiles in the underflues passages (7) are controlled by air inlet ducts (22). The oven is provided with two doors one at each end called ram car side door (13) and hot coke car side door (14). With reference to the schematic diagram of rope mechanism for door operation in sheet 12/4, the doors are lifted / lowered for opening / closing the oven by means of a wire rope clutch (33) attached to a wire rope (34) passing over the wire rope pulley (32) leading to a hydraulic cylinder (37) which pulls the wire rope (34) when required to lift the doors open. The wire rope is kept taut by the suspended deadweight (129) at one end and the wire rope pulleys (130) at the deadweight end and (131) at the hydraulic cylinder end completes the mechanism. On either side of the brickwork (24) as depicted in drawing 12/3 are RCC blocks (25) to keep the refractory bricks in place and to support the buckstays (26). The buckstays are steel columns and are spring loaded at the lower end by means of compression springs (27) and by the tie rods (28) and compression springs (27) at the upper end. The buck stay (26) is inclined with the oven end walls (29) and acts as support for door guide (30) and supports pulley frame (31) and wire rope pulley (32). The buck stays (26) also support the overhead duct (12), the hot air riser (39) and the current conductors (35) and (91).

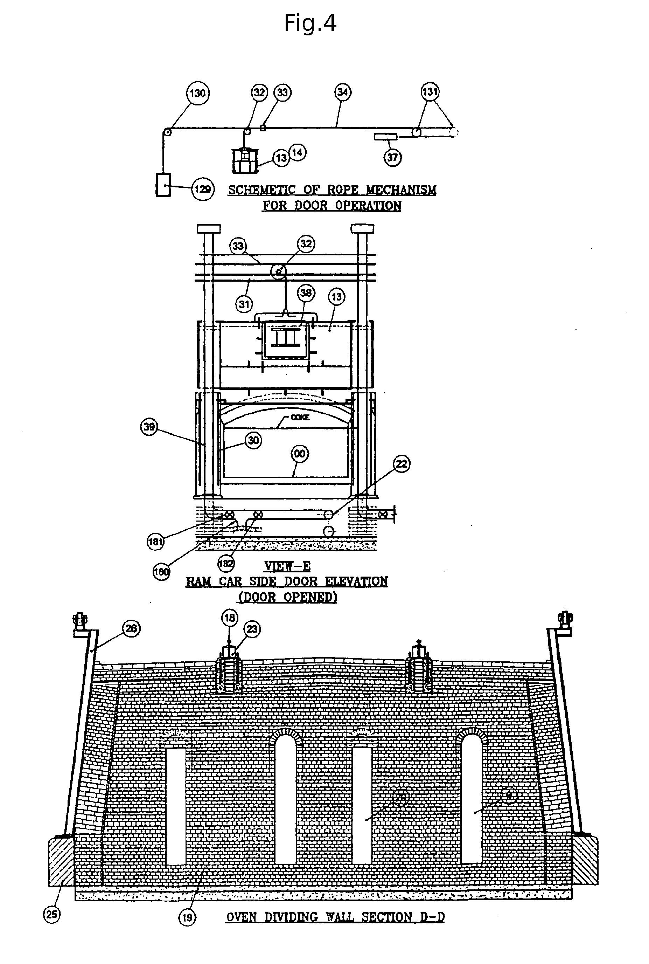

The ram car side door (13) as depicted in drawing 12/4 has a smaller wicket door (38) attached to it which can be opened or closed. When the wicket door (38) is opened it enables the leveller to be inserted into the oven for levelling with the ram car side door (13) in place thus preventing coal spilling out of the oven. Also the opening provided in the ram car side door (13) at the wicket door (38) is used for dedusting the oven during the charging sequence during which time the wicket door (38) is kept in the lifted position. The leveller is then withdrawn, wicket door (38) as depicted in drawing 12/3 closed, charge port cast iron covers (36) closed and the oven allowed to heat up forming coke during a cycle of 48 hours. A number of ovens are arranged side by side to form a battery of 21 ovens and the entire plant contains four batteries, along with four stacks (15) as depicted in drawing 12/1. The ovens operate under negative pressure induced by the stack or the induced draft fan, thus ensuring no leakage of gas outside the oven.

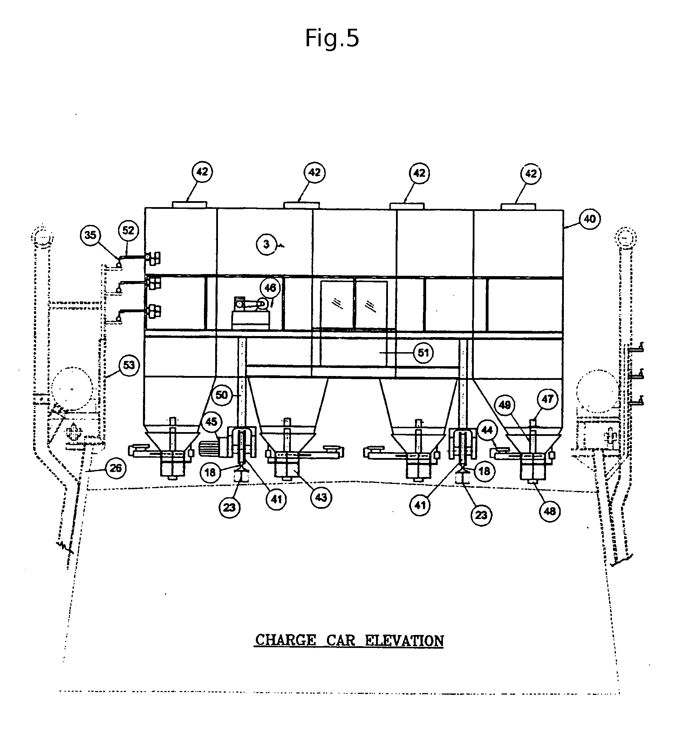

### Charge car (3): Reference drawing 12/5.

The primary function of a charge car is to convey the coal from the coal bin to the ovens.

With reference to the drawing 12/5 the charge car (3) consists of a container of capacity 28 tons of coal and is mounted on wheels (41) that run on two charge car rails (18) supported on steel beam (23) located on top of the ovens. The container (40) has four inlet openings (42) on the top for receiving coal and four outlets at the bottom fitted with telescopic chute (43) for discharge of coal into the oven. Flow control is by means of slide gate (44). The travel electric drive mechanism (45) enables the charge car to travel over all the ovens.. The container (40) is mounted on a steel chassis (50) and is provided with an operators cabin (51) containing all the controls, the charge car is also provided with an electromagnet charge port opener (47) by means of an electromagnet (48) used to open and close the charge port (2) cast iron covers (36) as depicted in drawing 12/3. The electric power for the charge car (3) is provided by the sliding contactors (52) which are in contact with bare conductors (35) fitted to posts (53) and supported by the buckstay column (26). The charge car conveys a charge of coal from the coal bin (151) to the oven as depicted in drawing 12/2.

### Ram Car (4) : Reference Drawing 12/6, 12/7 and 12/8.

The primary function of a ram car is to a) push the coke out of the oven by means of a pusher, b) to level the coal heaps in the oven and c) to dedust the oven during the charging and levelling sequence.

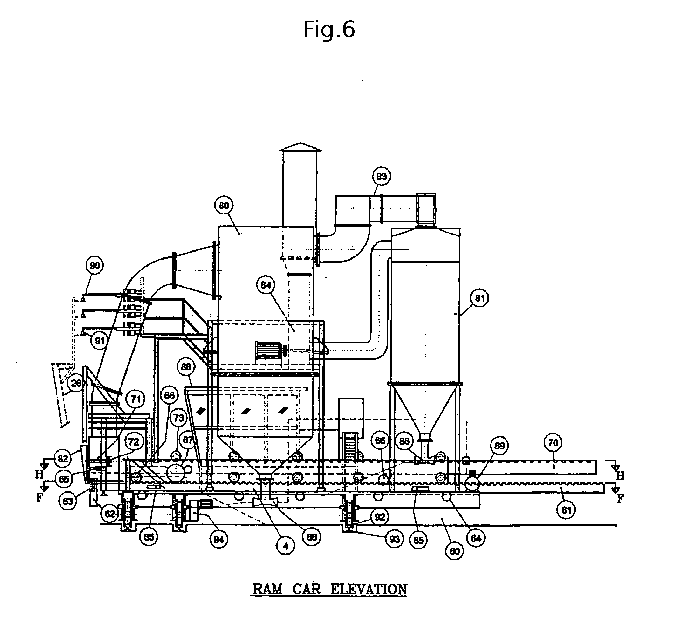

With reference to drawing 12/6 the ram car consists of a steel chassis (60), on which is mounted the pusher gear rack (61), pusher electric drive (67), leveller gear rack (70), leveller electric drive (73), multicyclones (80), bag filter (81), suction hood (82), exhaust fan (84), pneumatic conveyor (86), air compressors (89) and control cabin (88). The chassis (60) is mounted on six wheels (92),running on steel rails (93) and driven by electric drives (94), which enables the ram car to move to any oven. The power supply is by bare current conductors (91) via sliding contactors (90). The dedusting system comprises of the multiclones (80), the bag filter (81), the suction hood (81), connecting duct (83) and the exhaust fan (84). The suction hood (82) has hood hydraulic cylinders (85) fitted to press the suction hood (82) to the ram car side door (13) as depicted in the drawing 12/3. Below the multicyclones (80)and the bag filter (81) are provided the conveyor (86) which is used to convey the coal dust to a collecting bin for reuse..

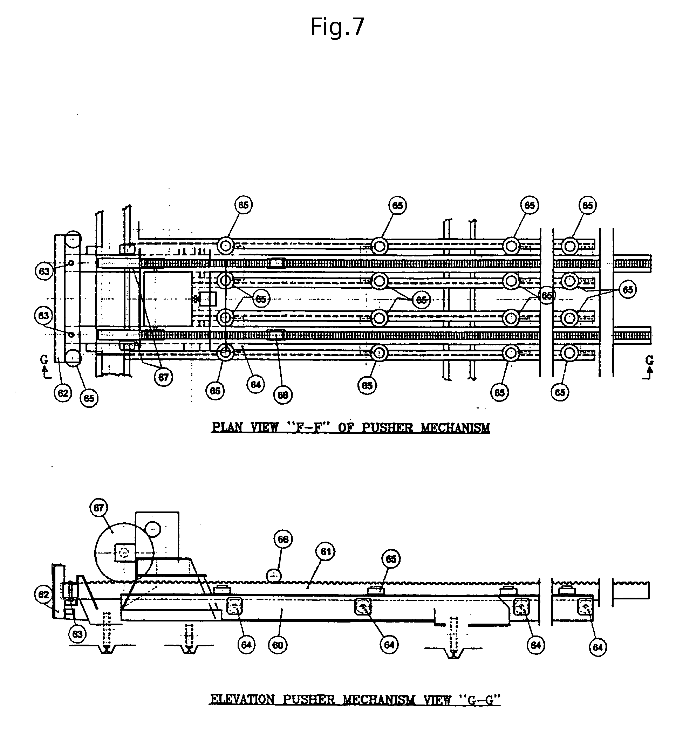

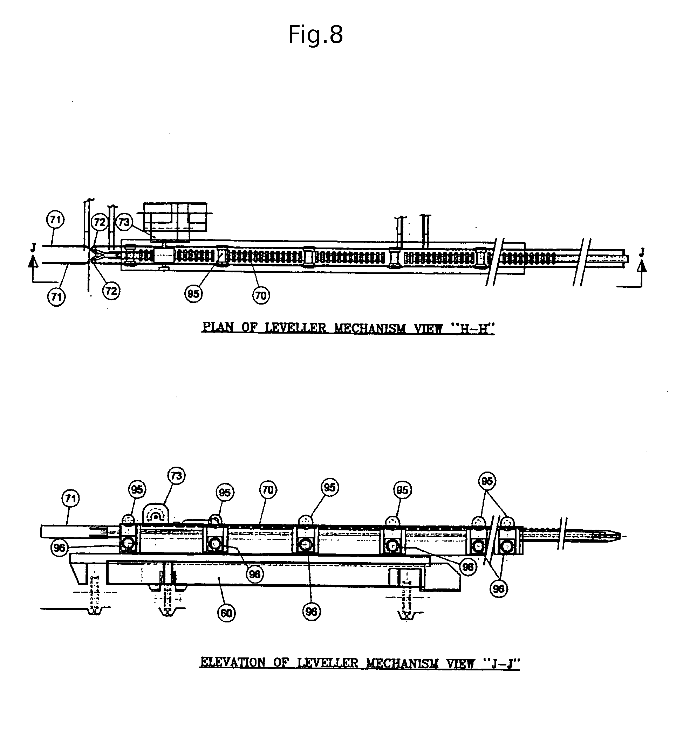

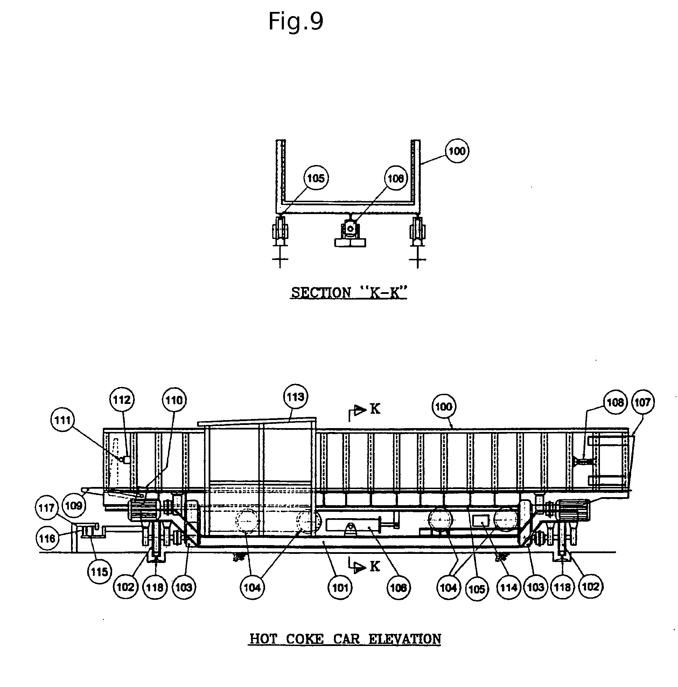

The control cabin (88) contains the control switches for all the drives in the ram car. The electric power for the ram car is prvided by the sliding contactors (90) and receive power from bare conductors (91) supported by the oven buck stays (26). With reference to drawing 12/7 the twin pusher gear racks (61) are fitted with pusher blade (62) by hinge pins (63) and supported on pusher roller (64) at the bottom, pusher side roller (65) and pusher top guide roller (66) for guiding the pusher gear rack (61) during pushing. The pusher gear rack (61) is driven by pusher electric drive (67). To operate the pusher blade the ram car side door (13) as depicted in drawing 12/3 and hot coke car side door (14) also depicted in drawing 12/3 are opened and the pusher electric drive (67) is switched on which moves the pusher gear rack (61) and pusher blade (62) with sufficient force to push the entire red hot coke from the oven floor into the hot coke car (5) as depicted in drawing 12/9. With reference to drawing 12/8 the leveller gear rack (70) is fitted with top roller (95) bottom support roller (96) and with hydraulically operated twin leveller arms (71). The leveller gear rack (70) is driven by the leveller electric drive (73). To operate the leveller, the hot coke car side door (14) and ram car side door (13) as depicted in drawing 12/3 are closed, the suction hood (82) as depicted in drawing 12/6 is moved forward by the hood pneumatic cylinder (85) to contact the openings in the ram car side door (13) as depicted in drawing 12/3. The exhaust fan (84) is started and coal is charged into the oven by the charge car (3) as depicted in drawing 12/5 through the charge ports (2) as depicted in drawing 12/3, after the cast iron covers (36) as depicted in drawing 12/3 are removed by the electro magnets (48) as depicted in drawing 12/5. After the coal is fully discharged in the oven, the leveller electric drive (73) is switched on and leveller gear rack (70) moves forward bringing the twin leveller arms (71) in contact with the coal heaps in the oven. The leveller is moved to and fro to obtain a flat coal pile profile in the oven.

### Hot Coke Car (5) : Reference drawing 12/9

The primary function of a hot coke car is to a) receive the coke being pushed out of the oven by the ram car and b) to carry the hot coke to quench tower.

With reference to drawing 12/9 the hot coke car consists of a horizontal, flat bottom, open tray (100) mounted on a chassis (101) having travel wheels (102) running on hot coke car rail (118) and provided with travel electric drive (103) to enable the car to move to any oven. Between the chassis (101) and the tray (100) are eight fixed position tray wheels (104) on which run the tray rails (105) fitted to the bottom of the tray (100). The tray (100) can be moved forward towards the oven end wall (29) as depicted in drawing 12/3 or could be retracted backwards away from the oven by the tray hydraulic actuator (106). At the other end of the tray (100) is the discharge flap (109) which is held in the upright position by means of a counterweight (110) and locked in position by a latch (111) and a hydraulic stopper (112).. On each side of the tray is arranged the operators control cubicle (113) and on one side on the chassis is arranged the hydraulic power pack (114). Power is collected by contactors (115) which are in constant contact with the power conductors (116) and covered by a protective cover (117).

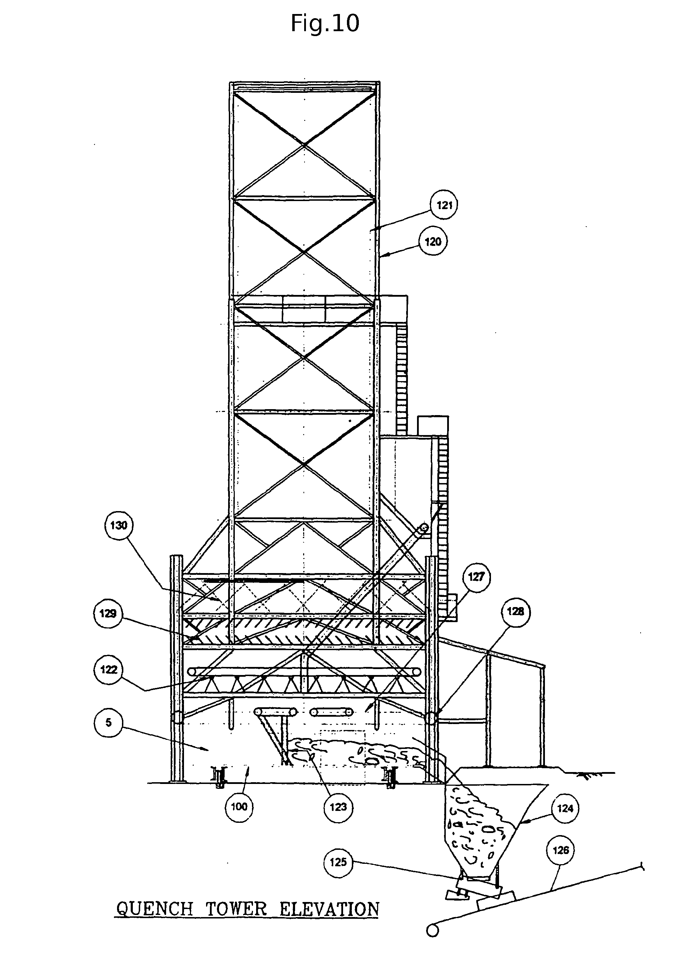

### Quench Tower (120) : Reference drawing 12/10

The primary function of the quench tower is to a) spray water over the red hot coke conveyed by the hot coke car and b) discharge the quenched coke out of the hot coke car by means of a pusher blade.

The quench tower consists of a steel tower (120) with side cladding (121), water sprays (122) grit arrestors (129) with cleaning sprays (130) and pusher blade (123). The pusher blade (123) is mounted in the quench tower and is fitted to a chain (127) and driven by pusher electric drive (128). The hot coke car (5) brings the red hot coke to the quench tower (120) and water is sprayed on it by the water sprays (122).

The pusher electric drive (128) is started and the pusher blade moves along the inside of the hot coke car tray (100) and pushes the coke out of the tray (100) in the process presses against the discharge flap (109) (shown in drawing12/9) in the down position and dropping into the hopper (124) for onward transfer by the feeder (125) and conveyor (126).

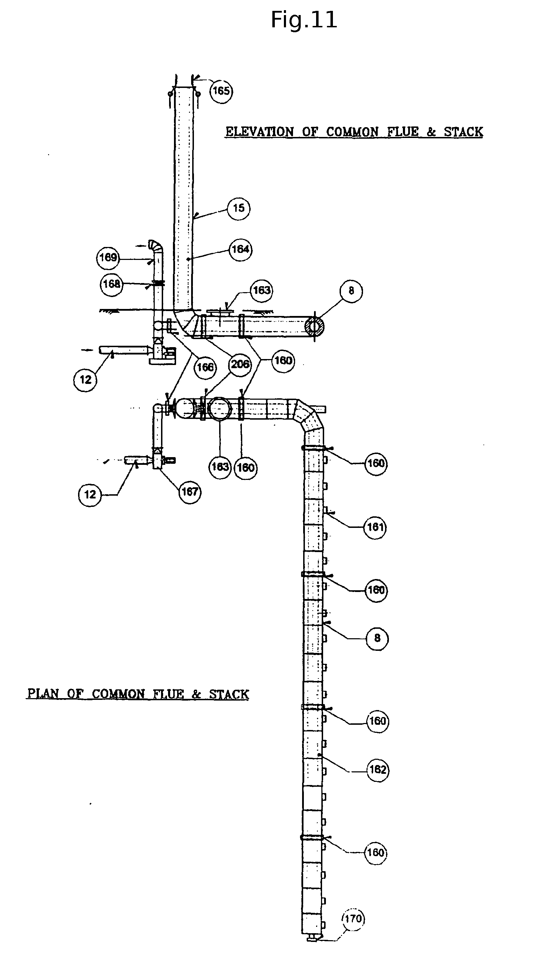

### Common Flue Duct & Stack : Reference drawing No. 12/11

The primary function of the common Flue duct is to a) collect the excess heat and particulates from the ovens b) to provide the space for complete combustion of the particulates in the gas and c) to convey the heat to the boiler or the stack as the process may require.

The common flue duct (8) consists of a steel duct lined inside with refractory and insulating bricks (162). The common flue duct (8) is also provided with expansion joints (160), connection flange (161) to connect to the feeder flue(9) shown in drawing. 12/3 and damper valve (170) to control inlet of tertiary air, which assists in complete combustion of particulates in the gas. The common flue duct is also provided with a connecting flange (163) for connecting the duct (208) leading to the boiler in drawing 12/1 and 12/2. The stack (15) consists of a vertical duct with refractory bricks (164) lining inside. The stack (15) is provided with shut off valve (165) on the top to close the stack when the gas is drawn to the boiler. The stack (15) is kept heated by the hot air in the duct (12) by the blower (167) and controlled by two shut off valves (166) and (168) which enable the hot air to be diverted to the stack (15) or vented into the atmosphere via the vent (169) only in the circumstances when the boiler is shutdown for the purpose of complying with statutory inspection by the Appropriate Authority. The shut off valve (206) isolates the stack and enables the hot gases to be diverted to the boiler. The valve (206) is water cooled for reliable operation.

### Coal bin tower: Reference Drawing No. 12/12

The primary function of the Coal Bin Tower is to store coal which initially is fed by means of a belt conveyor from the coal preparation area and ultimately discharges the coal into the charge car.

The coal bin tower consists of steel structure (150) supporting a bin (151) of 120 tons of coal and having four spouts (152) provided with flow control slide gates (153) operated by pneumatic cylinders (154). The bin (151) is fed by a belt conveyor (155), which conveys the coal from the coal preparation areas. Under the coal bin is a weigh bridge (157) which weighs the charge car (3) as depicted in drawing 12/5 for determining the weight of coal charged into the charge car.

### Power Plant Reference drawing 12/1 and 12/2

The primary function of the power plant is a) to convert the heat from the hot gases to steam by means of a boiler and b) to convert the steam to electrical energy by means of a steam turbine/generator.

The power plant consists of four boilers (200) fed by the waste gas in the common flue (8) and the duct (208) and controlled by the valve (201), before the boiler. The hot gases are diverted to the boiler by closing the valve (206). The steam generated in the boiler (200) is fed to the turbine (202) by the steam header (203). The turbine (202) is coupled to a generator (204) which generates about 22 MW of power from the system of 84 ovens. The spent waste gases from the boiler are then vented out through the waste gas stack (205). The exhaust gas fan (207) as depicted in drawing 12/1 is controlled to provide the necessary negative pressure in the ovens to sustain the coking process, when the boilers are operating.

When the boiler is shut off for statutory inspection vale (201) is closed and valve (206) opened thus venting the hot gases by the stack (15), for this purpose stack (15) is kept on heat by the hot air conveyed by the duct (12) as described in the para relating to common flue duct and stack.

However the power plant design does not form part of the invention.

## Claims

1. A top charging plant for producing metallurgical coke by the non-recovery method with coke ovens (0) made of refractories, and a common flue duct (8), the coke ovens each comprising a coking chamber (000), a floor (00), an underflue system, a roof (1) with charging openings (2), and a foundation (21), wherein
the ovens (0) are arranged side by side with dividing walls (19) and are interconnected with the common flue duct (8),
the underflue system is provided with an air inlet duct and a feeder flue duct (9) that is connected to the common flue duct (8), with the common flue duct (8) being provided with a damper valve (170) to control inlet of tertiary air, and
the foundation is provided with air ducts (11) for cooling,wherein the exhaust ends thereof are connected with the coking chamber and the air inlet duct of the underflue system.

2. A top charging plant according to claim 1, wherein the coke oven comprises alumina refractory bricks in different shapes, having refractory grades 30D, 45D, 55D, 62D and 70M, as well as castables Whiteheat C, K and LC 50.

3. A top charging plant according to claim 1 or 2, wherein it further comprises a charge car which is designed so as to be mounted on top of the coke oven and is equipped with telescopic chutes (43) for discharging coal into the oven.

4. A top charging plant according to any of claims 1 to 3, wherein it further comprises a ram car which is provided with hydraulically operated twin leveller arms (71).

5. A top charging plant according to any of claims 1 to 4, wherein the feeder flue duct is provided with a control damper (10).

6. A top charging plant according to any of claims 1 to 5, wherein the common flue is connected to one or more waste heat boilers (200).

7. A process for producing metallurgical coke by the non-recovery method in a top charging plant, wherein
coal is charged into coke ovens, heated by combustion of evolving fuel gases of coking by means of air in order to produce coke,
the coke is discharged from the coke ovens and quenched,
the exhaust flue gases are fed into a common flue duct which is maintained at a negative pressure, are combusted in the common flue duct and are transported to a stack and/or a waste heat boiler,
air is introduced into the common flue in a controlled manner in order to combust products in the exhaust flue gases, and
the coke oven foundation is cooled by means of ambient air and the heated air is fed into the coke oven chamber and the underflue system.

## Patentansprüche

1. Anlage mit Beschickung von oben zur Herstellung von metallurgischem Koks durch das Non-Recovery-Verfahren, mit Koksöfen (0) aus feuerfesten Materialien und einem gemeinsamen Abgaskanal (8), wobei jeder Koksofen (0) eine Kokskammer (000), einen Boden (00), ein Unterbauabgassystem, ein Dach (1) mit Beschickungsöffnungen (2) und einen Unterbau (21) umfasst, wobei
die Öfen (0) nebeneinander mit Trennwänden (19) angeordnet sind und mit dem gemeinsamen Abgaskanal (8) verbunden sind,
das Unterbauabgassystem mit einem Lufteinlasskanal und einem Abgaszufuhrkanal (9), der mit dem gemeinsamen Abgaskanal (8) verbunden ist, ausgestattet ist, wobei der gemeinsame Abgaskanal (8) mit einem Dämpferventil (170) zur Regelung der Zufuhr von Tertiärluft versehen ist, und
der Unterbau mit Luftkanälen (11) zum Kühlen versehen ist, wobei deren Auslassenden mit der Kokskammer und dem Lufteinlasskanal des Unterbauabgassystems verbunden sind.

2. Anlage mit Beschickung von oben gemäß Anspruch 1, wobei der Koksofen Aluminiumoxid-Schamottziegel in verschiedenen Formen mit den Feuerfestmaterialklassen 30D, 45D, 55D, 62D und 70M sowie Feuerfestbetonerzeugnisse Whiteheat C, K und LC 50 umfasst.

3. Anlage mit Beschickung von oben gemäß Anspruch 1 oder 2, wobei sie weiters einen Beschickungswagen umfasst, welcher ausgestaltet ist, um auf der Spitze des Koksofens montiert zu werden, und welcher mit telekopischen Rutschen (43) zum Abladen von Kohle in den Ofen ausgestattet ist.

4. Anlage mit Beschickung von oben gemäß einem der Ansprüche 1 bis 3, wobei sie weiters einen Rammwagen umfasst, welcher mit hydraulisch betriebenen Zwillingsplanierarmen (71) versehen ist.

5. Anlage mit Beschickung von oben gemäß einem der Ansprüche 1 bis 4, wobei der Abgaszufuhrkanal mit einer Regelklappe (10) ausgestattet ist.

6. Anlage mit Beschickung von oben gemäß einem der Ansprüche 1 bis 5, wobei der gemeinsame Abzug mit einem oder mehreren Abhitzekesseln (200) verbunden ist.

7. Verfahren zur Herstellung von metallurgischem Koks durch das Non-Recovery-Verfahren in einer Anlage mit Beschickung von oben, wobei
Kohle in Koksöfen geladen wird, durch Verbrennung von sich entwickelnden Verkokungsabgasen mittels Luft zur Erzeugung von Koks erhitzt wird,
der Koks aus den Koksöfen entladen und gelöscht wird,
die Abgase in einen gemeinsamen Abgaskanal, welcher bei Unterdruck gehalten wird, eingespeist werden, im gemeinsamen Abgaskanal verbrannt und zu einem Schornstein und/oder einem Abhitzekessel transportiert werden,
Luft in kontrollierter Weise in den gemeinsamen Abzug eingeleitet wird, um Produkte in den Abgasen zu verbrennen, und
der Koksofenunterbau mittels Umgebungsluft gekühlt wird und die erhitzte Luft in die Koksofenkammer und das Unterbauabgassystem eingespeist wird.

## Revendications

1. Installation à chargement par le haut pour produire du coke métallurgique par le procédé sans récupération d'énergie à l'aide de fours à coke (0) réalisés en matériaux réfractaires et d'un conduit de fumée commun (8), les fours à coke comprenant tous une chambre de cokéfaction (000), un plancher (00), un système de carneau de fumée inférieur, un toit (1) équipé d'ouvertures de chargement (2) et une fondation (21), dans laquelle
les fours (0) sont agencés côte à côte avec des parois de séparation (19) et sont interconnectés avec le conduit de fumée commun (8),
le système de carneau inférieur est pourvu d'un conduit d'admission d'air et d'un conduit d'alimentation de fumée (9) qui est raccordé au conduit de fumée commun (8), le conduit de fumée commun (8) étant équipé d'une vanne de registre (170) servant à réguler l'admission d'air tertiaire, et
la fondation est équipée de conduits d'air (11) destinés au refroidissement, dans laquelle les extrémités d'échappement de ceux-ci sont raccordées à la chambre de cokéfaction et au conduit d'admission d'air du système de carneau inférieur.

2. Installation à chargement par le haut selon la revendication 1, dans laquelle le four à coke comprend des briques réfractaires d'alumine de différentes formes ayant des indices de résistance à la chaleur de 30D, 45D, 55D, 62D et de 70M, de même que comportant des bétons réfractaires Whiteheat C, K et LC50.

3. Installation à chargement par le haut selon la revendication 1 ou 2, dans laquelle celle-ci comprend en outre une benne de chargement qui est conçue pour être montée en haut du four à coke et qui est équipée de goulottes télescopiques (43) servant à décharger de la houille dans le four.

4. Installation à chargement par le haut selon l'une quelconque des revendications 1 à 3, dans laquelle celle-ci comprend en outre une benne à vérins qui est équipée de deux bras repaleurs actionnés hydrauliquement (71).

5. Installation à chargement par le haut selon l'une quelconque des revendications 1 à 4, dans laquelle le conduit d'alimentation de fumée est équipé d'un registre de régulation (10).

6. Installation à chargement par le haut selon l'une quelconque des revendications 1 à 5, dans laquelle le conduit de fumée commun est raccordé à une ou plusieurs chaudières chauffées par chaleur perdue (200).

7. Traitement pour produire du coke métallurgique par le procédé sans récupération d'énergie dans une installation à chargement par le haut, dans lequel
de la houille est chargée dans des fours à coke, est chauffée par combustion de gaz combustibles émis de cokéfaction au moyen de l'air pour produire du coke,
le coke est déchargé des fours à coke et est refroidit brusquement,
les gaz de fumée d'échappement sont amenés dans le conduit de fumée commun qui est maintenu à une pression négative, sont brûlés dans le conduit de fumée commun et sont acheminés vers un haut-fourneau ou une chaudière chauffée par chaleur perdue,
l'air est introduit dans le conduit de fumée commun de manière commandée afin de brûler des produits dans les gaz de fumée d'échappement, et
la fondation de four à coke est refroidie au moyen de l'air ambiant et l'air chauffé est amené dans la chambre de four à coke et dans le système de carneau inférieur.
